# EUROPÄISCHE PATENTSCHRIFT

(11) **EP 1 354 143 B1**
(45) Veröffentlichungstag und Bekanntmachung des Hinweises auf die Patenterteilung: **10.08.2005**
(21) Anmeldenummer: 01984692.2
(22) Anmeldetag: 12.12.2001
(51) Int. Cl.: F16C 17/02, F16C 33/12, F16C 33/74

(54) **GLEITLAGER**
PLAIN BEARING
PALIER LISSE

(30) Priorität: 18.01.2001 DE 10102012
(43) Veröffentlichungstag der Anmeldung: 22.10.2003
(73) Patentinhaber: ROBERT BOSCH GMBH, 70442 Stuttgart (DE)
(72) Erfinder: EWERT, Andreas, 77839 Lichtenau (DE); WIELAND, Bernd, 76571 Gaggenau (DE)
(86) Internationale Anmeldenummer: PCT/DE2001/004661
(87) Internationale Veröffentlichungsnummer: WO 2002/057641

(56) Entgegenhaltungen:
- JP-A- 5 071 539
- JP-A- 10 339 321
- JP-A- 2000 337 381
- US-A- 5 022 492
- US-A- 5 457 588
- US-A- 5 683 183

## Beschreibung

### Stand der Technik

Die US 6 049 983 A zeigt ein Sintergleitlager, das an beiden axialen Enden des Sintergleitlagers in Umfangsrichtung Hohlräume aufweist. Diese Hohlräume dienen aber nicht dazu, um austretendes Schmiermittel zu speichern. Dazu wird ein Hohlraum verwendet, der mittig im Sinterlager vorhanden ist und in beiden axialen Richtungen durch eine Lauffläche des Sintergleitlagers begrenzt ist. An den äußeren Seitenflächen austretendes Schmiermittel steht zur Schmierung nicht mehr zur Verfügung bzw. verschmutzt andere Bauteile.

Aus der JP 07067282 A1 ist ein Anker mit einem Lager bekannt, der bei montierter Rotorwelle an der Stirnseite eine Vertiefung aufweist. Das Kriechen von Flüssigkeit aus einem Lager wird jedoch speziell durch ein zusätzliches, Flüssigkeit absorbierendes Material verhindert.

Die US 5 022 492 A offenbart ein Gleitlager, in dem eine Welle gelagert ist, mit zumindest einem Hohlraum zwischen Welle und Lager, der an zumindest einem axialen Ende des Lagers in Umfangsrichtung angeordnet ist und der in axialer Richtung länglich ausgebildet ist, so dass dort ein Kapillareffekt auftritt, wobei der Hohlraum eine Endfläche aufweist, die den Hohlraum in axialer Richtung begrenzt und nicht in Radialrichtung verläuft. Die Endfläche bildet einen Winkel von ca. 20° mit der Radialrichtung. Aus der JP 2000-337381A und der JP 5-71539 A sind Gleitlager mit ähnlich großen Winkeln bekannt.

In der US 5 457 588 A ist ein Gleitlager gezeigt, in dem eine Welle gelagert ist, mit zumindest einem Hohlraum zwischen Welle und Lager. Ein Paar von ringförmigen Nuten, die sich in axialer Richtung teilweise überlappen, sind peripher an einer rotierenden Hülse und einem stationären Auflager bereitgestellt, wobei sie eine Labyrinthdichtung bilden, um den Ausfluss eines Schmiermittels unterdrücken.

### Vorteile der Erfindung

Das erfindungsgemäße Gleitlager mit den kennzeichnenden Merkmalen des Anspruchs 1 hat demgegenüber den Vorteil, dass auf einfache Art und Weise an den beiden äusseren, die Lauffläche des Gleitlagers axial begrenzenden Seitenflächen austretendes Schmiermittel gespeichert wird, um es bspw. wieder der Lauffläche zuzuführen.

Durch die in den abhängigen Ansprüchen aufgeführten Massnahmen sind vorteilhafte Weiterbildungen und Verbesserungen des im Anspruch 1 genannten Gleitlagers möglich.

Das Gleitlager ist vorteilhafterweise ein Sintergleitlager, weil die vorhandenen Poren ein Reservoir für ein Schmiermittel bilden.

### Zeichnung

Ausführungsbeispiele der Erfindung sind in der Zeichnung vereinfacht dargestellt und in der nachfolgenden Beschreibung näher erläutert.

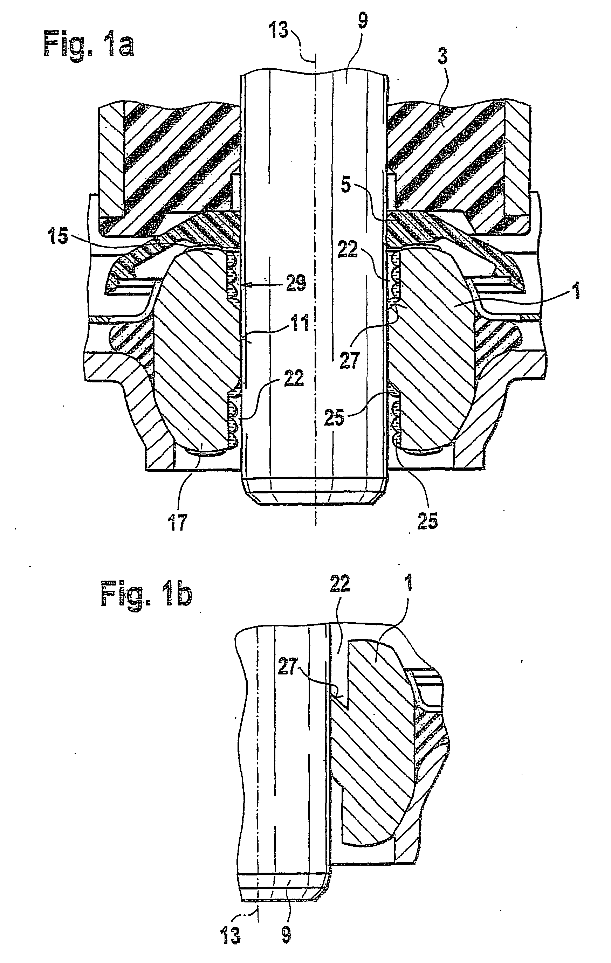

Es zeigen Figur 1a, b Ausführungsbeispiele eines erfindungsgemäss ausgebildeten Gleitlagers.

### Beschreibung der Ausführungsbeispiele

Figur 1a zeigt ein erfindungsgemäss ausgebildetes Gleitlager 1, das in einem Bauteil 3, beispielsweise einem Motor- oder Getriebegehäuse, einer elektrischen Maschine, bzw. einer elektrischen Antriebsvorrichtung, vorhanden ist. Das Gleitlager 1 kann bspw. auch ein Kalottenlager sein. Beispielsweise ist ein Befestigungsmittel 5 vorhanden, durch das das Gleitlager 1 in dem Bauteil 3 befestigt ist. Weitere Befestigungsarten sind möglich.
In dem Gleitlager 1 wird eine Welle 9 gelagert. Die Lagerung der Welle 9 in dem Gleitlager 1 erfolgt über die Kontaktfläche oder Gleitfläche, d.h. einer Lauffläche 11 zwischen Welle 9 und Gleitlager 1.
Die Welle 9 und das Gleitlager 1 haben in Axialrichtung eine Symmetrieachse 13.

Die Lauffläche 11 des Gleitlagers 1 ist in axialer Richtung beispielsweise mittig angeordnet. Jeweils ausgehend von einem ersten äusseren axialen Ende 15 des Gleitlagers 1 und einem zweiten äusseren axialen Ende 17 des Gleitlagers ist je ein Hohlraum 22 zwischen der Welle 9 und dem Gleitlager 1 vorhanden.
Der Hohlraum 22 umgreift die Welle 9 in Umfangsrichtung bspw. vollständig.
Das Gleitlager 1 hat neben dem Hohlraum 22 bspw. weitere Öffnungen oder Vertiefungen, in denen ein Schmiermittel eingebracht ist.

Bei dem Gleitlager 1 handelt es sich bspw. um ein poröses Material, das mit einem Schmiermittel, beispielsweise Öl, getränkt ist. Das poröse Gleitlager 1 wird bspw. durch Sintern hergestellt, ist also ein Sinterlager.

Beim Einsatz des Gleitlagers 1 kommt es aufgrund der Erwärmung und der unterschiedlichen Ausdehnungskoeffizienten von Schmiermittel und Gleitlager 1 dazu, dass Öltropfen 25 aus den Öffnungen oder Poren des Gleitlagers 1 herausgedrückt werden. Bei Gleitlagern nach dem Stand der Technik geht dieses Öl verloren, da es entlang der Welle 9 vom Gleitlager 1 wegkriecht.
Bei dem erfindungsgemässen Gleitlager 1 wird dieses Öl 25 in dem Hohlraum 22 gespeichert. Dafür weist der. Hohlraum 22 eine gewisse axiale Länge auf. Der Hohlraum 22 hat in axialer Richtung einen bspw. konstanten und entsprechend kleinen Querschnitt, so dass ein Kapillareffekt auftritt. Durch den bekannten Kapillareffekt treten zusätzliche Kräfte auf, die das Öl 25 in dem Hohlraum 22 halten, so dass das Öl 25 nicht verlorengeht, sondern zur Lauffläche 11 zurückwandern oder wieder in dem Gleitlager gespeichert werden kann. Der Hohlraum 22 ist in seinen Abmessungen den Oberflächenspannungen von Schmiermittel und vorhandenen Werkstoffen angepasst.

Nach dem Stand der Technik gibt es extra Schutzvorrichtungen oder Lappen, die verhindern, dass sich dieses Öl in dem Bauteil 3 verteilt. Dies ist bei dem erfindungsgemässen Gleitlager 1 nicht notwendig, da das Öl 25 durch den Kapillareffekt in dem Hohlraum 22 gehalten ist.
Der Hohlraum 22 hat eine Endfläche 27, die den Hohlraum 22 in axialer Richtung 13 zur Lauffläche 11 begrenzt. Die Endflächen 27 können in einer Radialrichtung 29 verlaufen, sie können aber auch mit der Radialrichtung 29 einen von 0 verschiedenen Schnittwinkel, bspw. 45°, bilden. Dadurch wird in diesem Bereich der Querschnitt des Hohlraums 22 zusätzlich verkleinert, wodurch der Kapillareffekt in diesem Bereich erhöht wird und das Öl 25 quasi in dem Hohlraum 22 angesaugt wird. Die Endfläche 27 ist zur Mitte hin, d.h. den Hohlraum 22 zur Lauffläche 11 hin verjüngend, geneigt.

Figur 1b zeigt ein weiteres Ausführungsbeispiel des erfindungsgemässen Gleitlagers 1, bei dem die Endfläche 27 zu einem äusseren axialen Ende 15, 17 hin geneigt ist.

Die axiale Länge des Gleitlagers 1 beträgt bspw. 11mm, die Länge der zwei Hohlräume 22 3mm, d.h. die axiale Länge der Lauffläche 11 beträgt dann etwa 5mm.
Das Material des Gleitlagers besteht aus Sintereisen, Sinterstahl, Sinterbronze oder einem anderen pulvermetallurgischen Werkstoff.

## Patentansprüche

1. Gleitlager, in dem eine Welle (9) gelagert ist, mit zumindest einem Hohlraum (22) zwischen Welle (9) und Lager (1), der an zumindest einem axialen Ende des Lagers (1) in Umfangsrichtung angeordnet ist und eine Lauffläche (11) zwischen Welle (9) und Lager (1) begrenzt, wobei der Hohlraum (22) in axialer Richtung (13) länglich ausgebildet ist, so dass dort ein Kapillareffekt auftritt, so dass Schmiermittel wieder zur Lauffläche (11) zurückgeführt wird, und eine Endfläche (27) aufweist, die den Hohlraum (22) in axialer Richtung (13) begrenzt und die nicht in Radialrichtung (29) verläuft, **dadurch gekennzeichnet, dass** die Endfläche (27) einen Winkel von 45° mit der Radialrichtung (29) bildet.

2. Gleitlager nach Anspruch 1, **dadurch gekennzeichnet, dass** das Lager (1) ein Sinterlager ist.

3. Gleitlager nach Anspruch 1, **dadurch gekennzeichnet, dass** der Hohlraum (22) die Welle (9) in Umfangsrichtung vollständig umgreift.

## Claims

1. Plain bearing, in which a shaft (9) is mounted, with at least one cavity (22) between the shaft (9) and bearing (1), the said cavity being arranged at at least one axial end of the bearing (1) in the circumferential direction and delimiting a running surface (11) between the shaft (9) and bearing (1), the cavity (22) having an elongate design in the axial direction (13), so that a capillary effect occurs there, with the result that lubricant is led back to the running surface (11) again, the cavity (22) having an end face (27) which delimits the said cavity (22) in the axial direction (13) and which does not run in the radial direction (29), **characterized in that** the end face (27) forms an angle of 45° with the radial direction (29).

2. Plain bearing according to Claim 1, **characterized in that** the bearing (1) is a sintered bearing.

3. Plain bearing according to Claim 1, **characterized in that** the cavity (22) completely surrounds the shaft (9) in the circumferential direction.

## Revendications

1. Palier lisse recevant un arbre (9), ayant au moins une cavité (22) entre l'arbre (9) et le palier (1), prévue à au moins une extrémité axiale du palier (1) dans la direction périphérique et délimitant une surface de circulation (11) entre l'arbre (9) et le palier (1),
la cavité (22) étant allongée dans la direction axiale (13) pour y produire un effet capillaire et que l'agent lubrifiant revienne vers la surface de circulation (11) et une surface d'extrémité (27) délimitant la cavité (22) dans la direction axiale (13), cette surface ne se situant pas dans la direction radiale (29),
**caractérisé en ce que**
la surface d'extrémité (27) forme un angle de 45° par rapport à la direction radiale (29).

2. Palier lisse selon la revendication 1,
**caractérisé en ce que**
le palier (1) est un palier fritté.

3. Palier lisse selon la revendication 1,
**caractérisé en ce que**
la cavité (22) entoure complètement l'arbre (9) dans la direction périphérique.
